# EUROPEAN PATENT SPECIFICATION

(11) **EP 3 915 809 B1**
(45) Date of publication and mention of the grant of the patent: **19.10.2022**
(21) Application number: 21168660.5
(22) Date of filing: 15.04.2021
(51) Int. Cl.: B60C 11/03, B60C 11/11, B60C 11/13

(54) **TIRE FOR MOTORCYCLE FOR RUNNING ON ROUGH TERRAIN**
REIFEN FÜR MOTORRAD ZUM FAHREN IN UNEBENEM GELÄNDE
PNEU DE MOTOCYCLETTE POUR ROULER SUR TERRAIN ACCIDENTÉ

(30) Priority: 25.05.2020 JP 2020090728
(43) Date of publication of application: 01.12.2021
(73) Proprietor: Sumitomo Rubber Industries, Ltd., Kobe-shi, Hyogo-ken (JP)
(72) Inventor: HINAMI, Yukiko c/o Sumitomo Rubber Industries, Ltd., Kobe-shi, Hyogo-ken, Hyogo 651-0072 (JP)
(74) Representative: Manitz Finsterwald Patent- und Rechtsanwaltspartnerschaft mbB

(56) References cited:
- EP-A1- 2 204 295
- JP-A- H02 175 305
- US-A- D 877 052
- US-B2- 10 239 361

## Description

### BACKGROUND OF THE INVENTION

### Field of the Invention

The present invention relates to a tire for a motorcycle for running on rough terrain.

### Description of the Background Art

Japanese Patent No. 6047131 describes a pneumatic tire for a motorcycle for running on rough terrain, in which crown blocks are provided to a tread portion. The crown blocks each include a block main body having an axially long shape and a projection that projects on the heel side of the block main body. Such a pneumatic tire includes many edge components in the tire axial direction and thus is considered to improve traction performance during straight running.

A tire in accordance with the preamble of claim 1 is known from US D 877 052. A related tire is known from US 10 239 361 B2.

In recent years, the above-described tire for a motorcycle has been required to further improve traction performance.

The present invention has been made in view of the above circumstances, and a main object of the present invention is to provide a tire for a motorcycle for running on rough terrain, which can improve traction performance.

### SUMMARY OF THE INVENTION

The present invention is directed to a tire for a motorcycle for running on rough terrain, comprising a tread portion, wherein the tread portion includes a base surface and a plurality of blocks raised outward in a tire radial direction from the base surface, at least one of the plurality of blocks includes a finned block, the finned block includes a block main body and at least two fin portions having a smaller width in a tire axial direction than the block main body and extending to one side in a tire circumferential direction, a recess is provided between the two fin portions so as to be recessed from the base surface, and a length in the tire circumferential direction of the recess is larger than a length in the tire axial direction of the recess.

In the tire for a motorcycle for running on rough terrain according to the present invention, the recess is preferably provided between regions obtained by respectively extending the two fin portions so as to be parallel to the tire circumferential direction.

In the tire for a motorcycle for running on rough terrain according to the present invention, a distance in the tire circumferential direction from the block main body to the recess is preferably smaller than a length in the tire circumferential direction of each of the two fin portions.

In the tire for a motorcycle for running on rough terrain according to the present invention, in a tread development, the recess is preferably provided on the block main body side of a straight line connecting tips of the two fin portions.

In the tire for a motorcycle for running on rough terrain according to the present invention, the length in the tire circumferential direction of the recess is preferably larger than the length in the tire circumferential direction of each of the two fin portions.

In the tire for a motorcycle for running on rough terrain according to the present invention, the recess is preferably provided at a middle position in the tire axial direction between the two fin portions.

In the tire for a motorcycle for running on rough terrain according to the present invention, the one recess is preferably provided between the two fin portions.

In the tire for a motorcycle for running on rough terrain according to the present invention, a length in the tire axial direction of the finned block is preferably larger than a length in the tire circumferential direction of the finned block.

In the tire for a motorcycle for running on rough terrain according to the present invention, preferably, the tread portion has a designated rotation direction of the tire, and the fin portions are provided on a heel side in the rotation direction of the block main body.

In the tire for a motorcycle for running on rough terrain according to the present invention, preferably, the finned block includes a first side surface facing another side in the tire circumferential direction, and the first side surface is connected to the base surface via a curved surface.

In the tire for a motorcycle for running on rough terrain according to the present invention, a maximum height of the curved surface from the base surface is preferably smaller than a maximum height of the finned block from the base surface.

In the tire for a motorcycle for running on rough terrain according to the present invention, the finned block preferably includes a protrusion protruding from a tread surface thereof in a block height direction, and a tread surface recess recessed from the tread surface.

In the tire for a motorcycle for running on rough terrain according to the present invention, preferably, the tread portion has a designated rotation direction of the tire, the tread surface of the finned block has an edge on a toe side of the rotation direction, and a chamfered portion is provided at the edge on the toe side.

In the tire for a motorcycle for running on rough terrain according to the present invention, the finned block preferably includes a crown block on a tire equator side and a middle block adjacent to the crown block.

In the tire for a motorcycle for running on rough terrain according to the present invention, preferably, the tread portion has a designated rotation direction of the tire, and a centroid of a tread surface of the middle block is located on the toe side in the rotation direction of a centroid of a tread surface of the crown block.

The tire for a motorcycle for running on rough terrain according to the present invention can exhibit excellent traction performance since the above configuration is adopted in the tire.

### BRIEF DESCRIPTION OF THE DRAWINGS

FIG. 1 is a cross-sectional view showing an embodiment of the tire for a motorcycle according to the present invention;
FIG. 2 is a development showing a tread pattern of a tread portion in FIG. 1;
FIG. 3 is an enlarged perspective view of a finned block in FIG. 2;
FIG. 4 is a plan view of the finned block in FIG. 2;
FIG. 5 is a plan view of the finned block (crown block);
FIG. 6 is a cross-sectional view taken along a line B-B in FIG. 5;
FIG. 7 is an enlarged plan view of a middle block in FIG. 2;
FIG. 8 is an enlarged plan view of a finned block of another embodiment of the present invention;
FIG. 9 is a cross-sectional view taken along a line C-C in FIG. 8;
FIG. 10 is an enlarged plan view of a finned block of still another embodiment of the present invention;
FIG. 11 is a cross-sectional view taken along a line D-D in FIG. 10; and
FIG. 12 is a development of a tread portion of a reference tire.

### DESCRIPTION OF THE PREFERRED EMBODIMENTS

Hereinafter, embodiments of the present invention will be described with reference to the drawings.

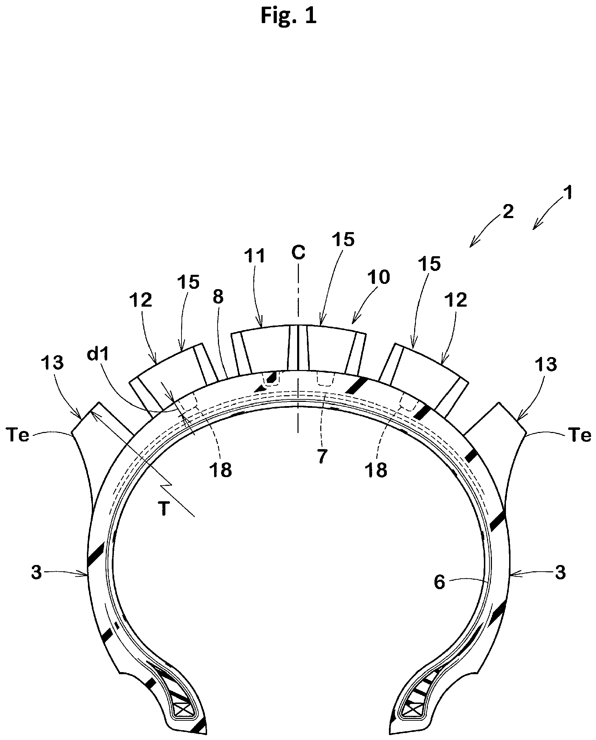

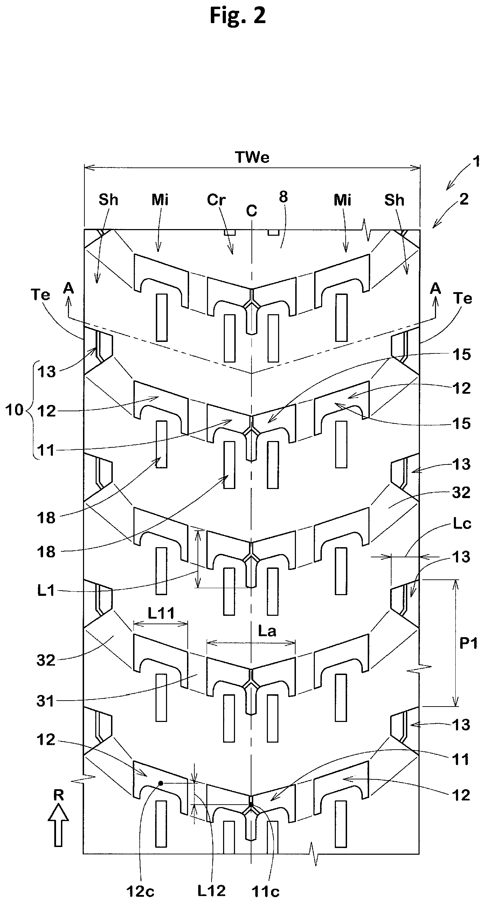

FIG. 1 shows a meridional cross-sectional view of a tire for a motorcycle for running on rough terrain (hereinafter, sometimes referred to simply as "tire") 1 according to an embodiment of the present invention in a normal state, including a tire rotation axis (not shown). FIG. 2 is a development showing a tread pattern of a tread portion 2 of the tire 1. FIG. 1 is a cross-sectional view taken along a line A-A in FIG. 2.

In the case of a tire for which various standards are defined, the "normal state" is a state where the tire is fitted on a normal rim and inflated to a normal internal pressure and no load is applied to the tire. In the case of a tire for which various standards are not defined, the normal state means a standard use state, corresponding to the purpose of use of the tire, where no load is applied to the tire. In the present description, unless otherwise specified, dimensions and the like of components of the tire are values measured in the normal state. In addition, if there is a slight difference in dimensions and the like of components of the tire depending on the measurement position, unless otherwise specified, each dimension shown in the present description means the median value between the minimum and maximum values. Moreover, each configuration described in the present description tolerates the usual errors contained in a rubber molded product.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 according to the present embodiment is suitably used, for example, as a tire for motocross racing. The tire 1 according to the present embodiment is suitably used, for example, as a tire for the rear wheel of a motocross vehicle. However, the tire 1 is not limited such a mode. In the cross-section, the outer surface of the tread portion 2 of the tire 1 according to the present embodiment is curved in an arc shape that is convex outward in the tire radial direction.

The tire 1 according to the present embodiment includes, for example, a carcass 6 and a tread reinforcing layer 7. For these components, a known configuration is adopted as appropriate.

The tread portion 2 includes a base surface 8 and a plurality of blocks 10 raised outward in the tire radial direction from the base surface 8. The blocks 10 of the present embodiment include a plurality of crown blocks 11, a plurality of middle blocks 12, and a plurality of shoulder blocks 13.

At least one of the plurality of blocks 10 includes a finned block 15. In the present embodiment, the finned block 15 is each of the crown blocks 11 and the middle blocks 12.

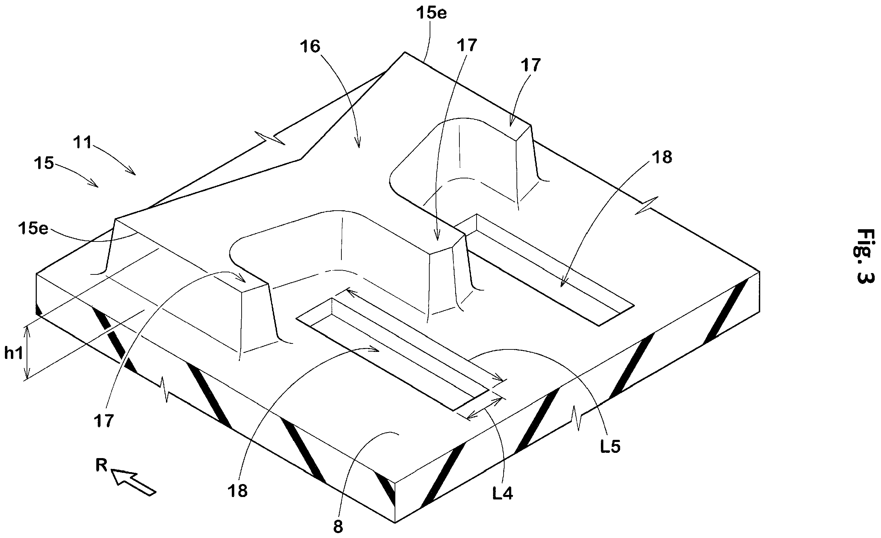

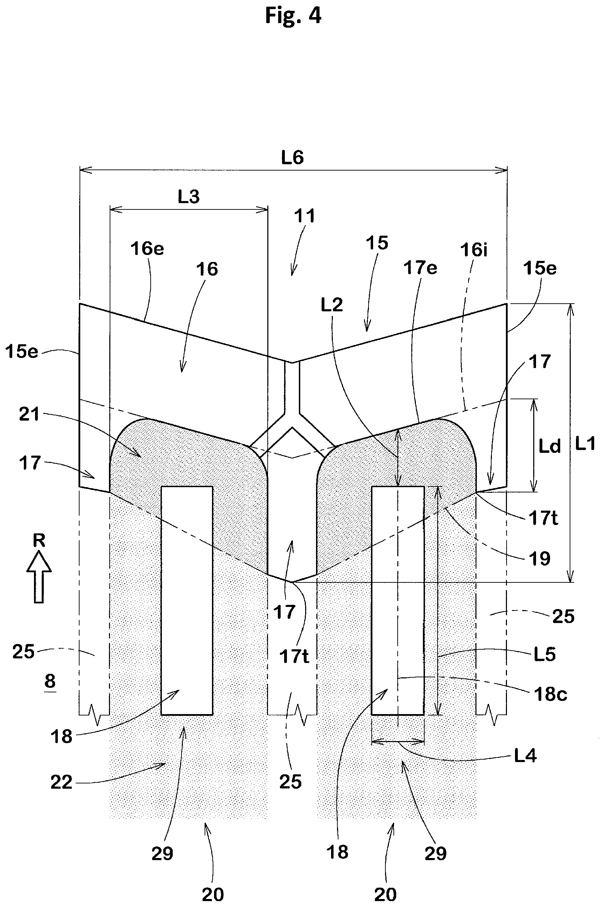

FIG. 3 is an enlarged perspective view of the finned block 15. FIG. 4 is an enlarged plan view of the finned block 15. The finned block 15 shown in FIG. 3 and FIG. 4 is each crown block 11. The configuration of the finned block 15 described as the crown block 11 is also applied to the middle blocks 12 except for blocks specifically mentioned.

As shown in FIG. 3 or FIG. 4, the finned block 15 includes a block main body 16 and at least two fin portions 17 having a smaller width in the tire axial direction than the block main body 16 and extending in the tire circumferential direction. Such a finned block 15 has large stiffness in the tire circumferential direction and exerts high shearing force on rough terrain such as muddy terrain. In the present description, the block main body 16 is formed between a first block edge 16e and a second block edge 16i. The first block edge 16e is a block edge, of the finned block 15, extending in the tire axial direction so as to be most distant from the fin portions 17 in the tire circumferential direction. The second block edge 16i is a virtual block edge extending at the position, closest to the first block edge 16e, on a block edge 17e connecting the two fin portions 17, so as to be parallel to the first block edge 16e. In the present description, each fin portion 17 is a portion extending from the second block edge 16i.

In the present embodiment, a recess 18 is provided between two fin portions 17 so as to be recessed from the base surface 8. The recess 18 is formed such that a length L5 in the tire circumferential direction of the recess 18 is larger than a length L4 in the tire axial direction of the recess 18. Such a recess 18 changes the tread profile of a tire meridian cross-section such that a radius of curvature T (shown in FIG. 1) is increased, at the time of coming into contact with the ground. Accordingly, the finned block 15 comes into sufficient contact with the ground over both ends 15e thereof in the tire axial direction and thus increases the shearing force. Therefore, the tire 1 according to the present embodiment exhibits excellent traction performance.

Hereinafter, more detailed configurations of the present embodiment will be described. The configurations described below show a specific mode of the present embodiment rather than the essential elements of the present invention. Therefore, it is needless to say that the present invention can achieve the above-described effect even when the configurations described below are not provided. In addition, even when any one of the configurations described below is independently applied to the tire 1 according to the present invention having the above-described characteristics, performance improvement corresponding to each configuration can be expected. Furthermore, even when some of the configurations described below are applied in combination, performance improvement corresponding to each configuration can be expected.

As shown in FIG. 2, the tread portion 2 has, for example, a directional pattern having a designated rotation direction R. The rotation direction R is indicated, for example, on each sidewall portion 3 (shown in FIG. 1) by characters or symbols. However, the present invention is not limited to such a mode.

The tread portion 2 is divided, for example, into a crown region Cr, middle regions Mi, and shoulder regions Sh. The crown region Cr is a region centered at a tire equator C and having a width that is 1/3 of a tread development width TWe. Each shoulder region Sh is a region having a width that is 1/6 of the tread development width TWe, on the tire equator C side from a tread end Te. Each middle region Mi is a region between the crown region Cr and the shoulder region Sh.

The tread development width TWe is the distance in the tire axial direction between the tread ends Te, Te when the tread portion 2 is developed on a plane. Each tread end Te is an edge of each block located on the outermost side in the tire axial direction among blocks provided to the tread portion 2.

A centroid 11c of the tread surface of each crown block 11 is located within the crown region Cr. In a preferred embodiment, each crown block 11 is provided on the tire equator C. A centroid 12c of the tread surface of each middle block 12 is located within the middle region Mi. In addition, each middle block 12 is adjacent to the crown block 11 in the tire axial direction. The centroid of the tread surface of each shoulder block 13 is located within the shoulder region Sh. In addition, each shoulder block 13 is adjacent to the middle block 12 in the tire axial direction.

A length La in the tire axial direction of each crown block 11 is, for example, 20% to 40% of the tread development width TWe. A length L11 in the tire axial direction of each middle block 12 is, for example, 10% to 20% of the tread development width TWe. A length Lc in the tire axial direction of each shoulder block 13 is, for example, 8% to 15% of the tread development width TWe. The length in the tire circumferential direction of each block is, for example, 10% to 30% of one pitch length P1 of the blocks 10. However, the present invention is not limited to such a mode.

As shown in FIG. 4, the length L4 in the tire axial direction of the recess 18 is preferably 20% to 30% of the length L5 in the tire circumferential direction of the recess 18. Accordingly, the stiffness in the tire circumferential direction of the finned block 15 is maintained by the fin portions 17, and sufficient contact of the finned block 15 with the ground due to the recess 18 is ensured.

The recess 18 is provided, for example, between regions (hereinafter, sometimes referred to as "fin portion extension regions") 25 obtained by respectively extending the two fin portions 17 so as to be parallel to the tire circumferential direction. In the present embodiment, the entirety of the recess 18 is located within a block adjacent region 20 between the fin portion extension regions 25. In other words, the recess 18 of the present embodiment is not formed in the fin portion extension regions 25. Accordingly, the finned block 15 can be brought into sufficient contact with the ground without excessively reducing the stiffness of the tread portion 2. In particular, since the length L4 in the tire axial direction of the recess 18 is smaller than the length L5 in the tire circumferential direction of the recess 18, the recess 18 promotes the tread profile to change such that the radius of curvature T is increased, and an excessive reduction in stiffness is suppressed.

The block adjacent region 20 includes a gap portion 21 surrounded by the two fin portions 17 and a straight line (virtual line) 19 connecting tips 17t of the two fin portions 17, and an extension portion 22 extending from the gap portion 21 in the (heel side) direction away from the block main body 16. The block adjacent region 20 extends to a block (not shown) adjacent to the heel side of the finned block 15. For ease of understanding, in FIG. 4, the gap portion 21 and the extension portion 22 are represented in different colors. The recess 18 may be provided over the block adjacent region 20 and the fin portion extension regions 25, and, further, may be provided so as to extend beyond the fin portion extension regions 25 in the tire axial direction.

The recess 18 is provided on the block main body 16 side of the straight line 19. In other words, the recess 18 is provided in the gap portion 21 and the extension portion 22 across the straight line 19. Since the recess 18 is provided in the gap portion 21, the finned block 15 can be effectively deformed easily. Since the recess 18 is also provided in the extension portion 22, both ends 15e of the finned block 15 can be effectively brought into contact with the ground.

In the present embodiment, the recess 18 is provided at a center position 29 in the tire axial direction between the two fin portions 17. Accordingly, the finned block 15 can be brought into sufficient contact with the ground over both ends 15e thereof in the tire axial direction. The phrase "provided at the center position 29" includes not only the case where a width center line 18c of the recess 18 is provided at the middle in the tire axial direction between the two fin portions 17, but also the case where the recess 18 overlaps the middle in the tire axial direction between the two fin portions 17.

For example, one recess 18 is provided between two fin portions 17. Accordingly, for example, the length L4 in the tire axial direction of each recess 18 is increased as compared to the case where a plurality of recesses 18 are provided between two fin portions 17. Therefore, mud and dirt trapped in the recess 18 are smoothly removed, so that high shearing force by the recess 18 can be exerted. As for the number of recesses 18, a plurality of recesses 18 may be provided between two fin portions 17.

The recess 18 is formed such that the length L5 in the tire circumferential direction of the recess 18 is, for example, larger than the length (maximum length) Ld in the tire circumferential direction of each fin portion 17. Accordingly, the stiffness in the tire axial direction of the finned block 15 is effectively reduced, and the stiffness in the tire circumferential direction of the finned block 15 is maintained high, so that high traction performance is exhibited. The length L5 of the recess 18 is not particularly limited, but is preferably not less than 1.5 times and further preferably not less than 1.8 times, and is preferably not greater than 3.5 times and further preferably not greater than 3.2 times, of a length Ld of each fin portion 17.

The length L5 in the tire circumferential direction of the recess 18 is, for example, preferably not less than 20% and further preferably not less than 30%, and is preferably not greater than 80% and further preferably not greater than 50%, of one pitch length P1 (shown in FIG. 2) in the tire circumferential direction of the finned block 15. The size of the recess 18 is not limited to such a size.

A depth d1 (shown in FIG. 1) of the recess 18 is, for example, preferably not greater than 50% of a maximum height (shown in FIG. 3) h1 of the finned block 15. Accordingly, a great reduction in the stiffness of the tread portion 2 is suppressed. In order to enhance traction performance, the depth d1 of the recess 18 is preferably not less than 10% and further preferably not less than 20%, and is further preferably not greater than 40%, of the maximum height h1 of the finned block 15.

A distance L2 in the tire circumferential direction from the block main body 16 to the recess 18 is preferably smaller than a length L1 in the tire circumferential direction of the finned block 15. In the case where the distance L2 is larger than the length L1, the tread profile may become less deformed, and traction performance may be deteriorated as compared to the present embodiment. In order to suppress a reduction in the stiffness of the block main body 16 while enhancing traction performance, the distance L2 is, for example, preferably 5% to 25% of the length L1.

In the present embodiment, the distance L2 from the block main body 16 to the recess 18 is specified, and the recess 18 is provided so as not to overlap the regions obtained by extending the fin portions 17 so as to be parallel to the tire circumferential direction. Accordingly, change of the tread profile is promoted while the stiffness in the tire circumferential direction of the finned block 15 is maintained high. Therefore, further improvement of traction performance is expected.

The length L4 in the tire axial direction of the recess 18 is preferably not less than 20%, more preferably not less than 25%, and further preferably not less than 30%, and is preferably not greater than 60%, more preferably not greater than 55%, and further preferably not greater than 50%, of a distance L3 in the tire axial direction between the two fin portions 17. Accordingly, the above-described action is effectively exerted.

Each fin portion 17 is provided, for example, on the heel side in the rotation direction R (hereinafter, sometimes referred to simply as "heel side") of the block main body 16. Accordingly, deformation of the block main body 16 to the heel side is suppressed, and traction performance is further improved. Each fin portion 17 may be provided on the toe side in the rotation direction R (hereinafter, sometimes referred to simply as "toe side") of the block main body 16.

As for the finned block 15 of the present embodiment, for example, the length L1 (shown in FIG. 2) in the tire circumferential direction of the finned block 15 is smaller than a length L6 in the tire axial direction of the finned block 15. Specifically, the length L1 in the tire circumferential direction of the finned block 15 is preferably not less than 50% and further preferably not less than 60%, and is preferably not greater than 80% and further preferably not greater than 70%, of the length L6 in the tire axial direction of the finned block 15. Such a finned block 15 which is long in the tire axial direction serves to enhance traction performance. In particular, in the present embodiment, since the recesses 18 which are long in the tire circumferential direction are provided between the fin portions 17 of the finned block 15, traction performance is further improved.

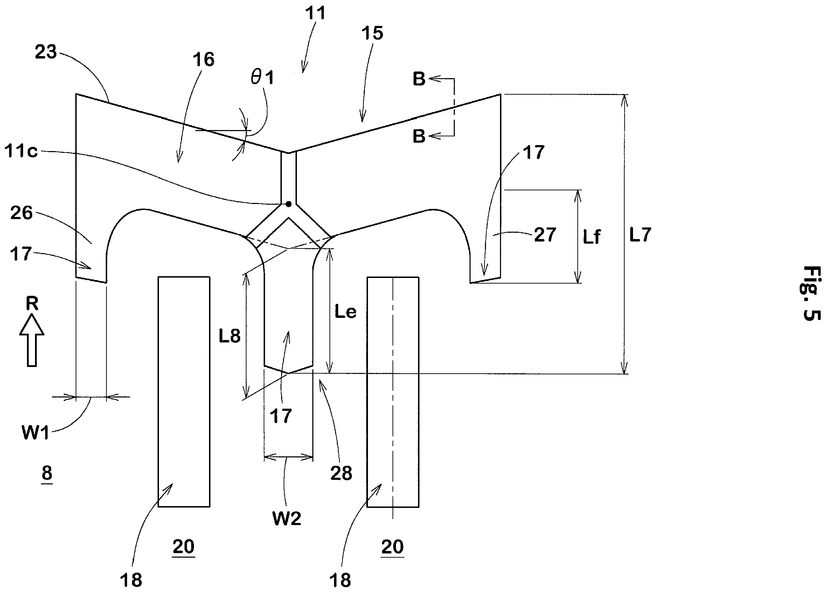

FIG. 5 is an enlarged plan view of the crown block 11 formed as the finned block 15. As shown in FIG. 5, the crown blocks 11 of the present embodiment are each formed, for example, as a finned block 15 including three fin portions 17. The three fin portions 17 include, for example, a first fin portion 26 on one side in the tire axial direction, a second fin portion 27 on the other side in the tire axial direction, and a third fin portion 28 between the first fin portion 26 and the second fin portion 27. In addition, in the present embodiment, one recess 18 is disposed in each of the block adjacent region 20 between the first fin portion 26 and the third fin portion 28 and the block adjacent region 20 between the second fin portion 27 and the third fin portion 28. Accordingly, the crown block 11 is reliably brought into contact with the ground over the tire axial direction, so that high traction performance is exhibited.

The first fin portion 26 is connected to the side surface on the one side in the tire axial direction of the block main body 16. The second fin portion 27 is connected to the side surface on the other side in the tire axial direction of the block main body 16. The first fin portion 26 and the second fin portion 27 are formed in substantially the same shape.

The third fin portion 28 is connected to a center portion in the tire axial direction of the block main body 16. In the present embodiment, each crown block 11 is disposed in the crown region Cr, and the third fin portion 28 is disposed on the tire equator C. The centroid 11c of the tread surface of the crown block 11 is located on a portion, of the block main body 16, extending from the third fin portion 28 toward the toe side so as to be parallel to the tire circumferential direction. Accordingly, the third fin portion 28 effectively suppresses falling of the block main body 16.

In order to reliably exhibit the above-described effect, the third fin portion 28 is formed such that a length Le in the tire circumferential direction of the third fin portion 28 is, for example, larger than each of lengths Lf in the tire circumferential direction of the first fin portion 26 and the second fin portion 27. In addition, the third fin portion 28 protrudes to the heel side more than the first fin portion 26 and the second fin portion 27.

A width W2 in the tire axial direction of the third fin portion 28 is, for example, larger than each of widths W1 in the tire axial direction of the first fin portion 26 and the second fin portion 27. Specifically, the width W2 of the third fin portion 28 is, for example, 130% to 200% of the width W1 of the first fin portion 26. Accordingly, the third fin portion 28 suppresses falling of the block main body 16, and the first fin portion 26 and the second fin portion 27 become appropriately deformed, whereby mud and dirt trapped between the fin portions 17 can be effectively removed.

The width W1 or W2 in the tire axial direction of each fin portion 17 of the crown block 11 is, for example, preferably not less than 5% and further preferably not less than 10%, and is preferably not greater than 20% and further preferably not greater than 15%, of the length La (shown in FIG. 2) in the tire axial direction of the crown block 11.

A maximum length L8 in the tire circumferential direction of each fin portion 17 of the crown block 11 (in the present embodiment, the length Le in the tire circumferential direction of the third fin portion 28) is, for example, preferably not less than 60% and further preferably not less than 80%, and is preferably not greater than 150% and further preferably not greater than 135%, of a length L7 in the tire circumferential direction of the crown block 11.

In the tread development, the first side surface 23, facing the toe side, of the crown block 11 is, for example, recessed toward the heel side so as to extend from both ends to the middle in the tire axial direction. The first side surface 23 of the present embodiment is formed, for example, by connecting two flat surfaces inclined in opposite directions relative to the tire axial direction, via a ridge line. An angle θ1 of the first side surface (first block edge 16e) 23 relative to the tire axial direction is, for example, 5 to 30°. Such a first side surface 23 exerts great reaction force when pushing away mud and dirt during running on rough terrain.

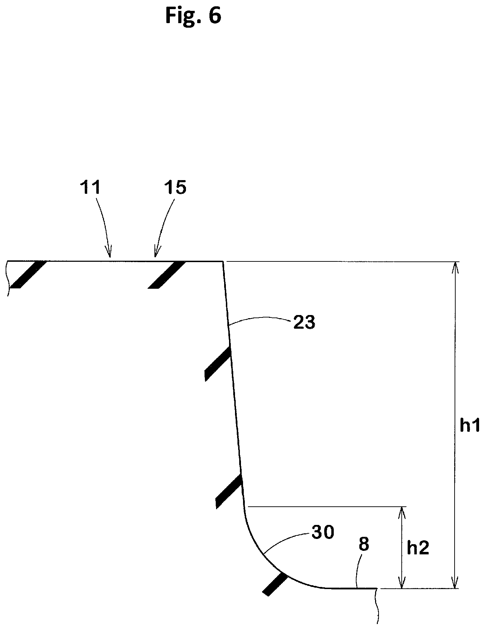

FIG. 6 shows a cross-sectional view of the crown block 11 taken along a line B-B in FIG. 5. As shown in FIG. 6, the first side surface 23 is connected to the base surface 8 via a curved surface 30. The curved surface 30 is a surface having a center outside the block and curved in an arc shape. A maximum height h2 of the curved surface 30 from the base surface 8 is smaller than the maximum height h1 of the finned block 15 from the base surface 8. In the present embodiment, each fin portion 17 and the block main body 16 have the same height. The maximum height h2 of the curved surface 30 is, for example, 20% to 50% of the maximum height h1 of the finned block 15. Such a curved surface 30 makes the crown block 11 hard to fall and serves to enhance traction performance.

In the present embodiment, owing to the synergistic effect of the curved surface 30 and the above-described recesses 18, deformation of the crown block 11 to both sides in the tire axial direction is promoted, and, further, traction performance is improved. In particular, since the shape of each recess 18 is made long in the tire circumferential direction as described above, traction performance can be further improved.

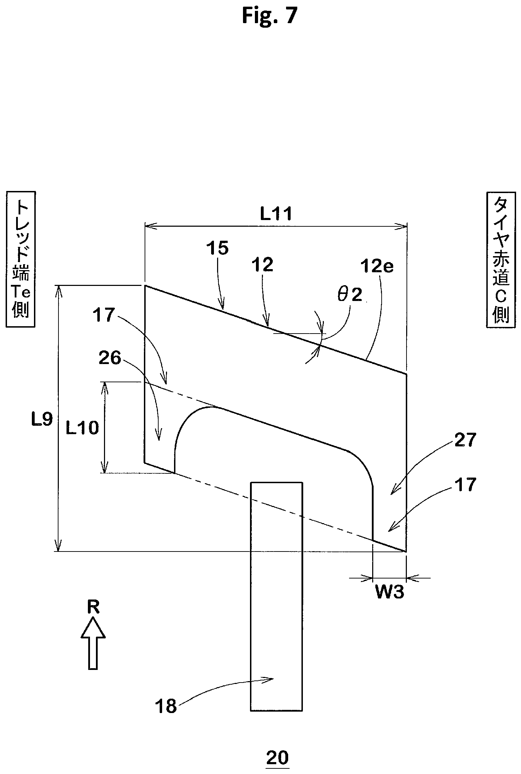

FIG. 7 is an enlarged plan view of the middle block 12 formed as the finned block 15. As shown in FIG. 7, each middle block 12 of the present embodiment is formed as a finned block 15 including two fin portions 17. The two fin portions 17 include, for example, a first fin portion 26 on one side in the tire axial direction and a second fin portion 27 on the other side in the tire axial direction. In addition, in the present embodiment, one recess 18 is disposed in the block adjacent region 20 between the first fin portion 26 and the second fin portion 27 of the middle block 12.

Each of lengths L10 in the tire circumferential direction of the first fin portion 26 and the second fin portion 27 of the middle block 12 is, for example, smaller than the length Le (shown in FIG. 5) in the tire circumferential direction of the third fin portion 28 of the crown block 11. Each of the lengths L10 in the tire circumferential direction of the first fin portion 26 and the second fin portion 27 of the middle block 12 is equal to each of the lengths Lf in the tire circumferential direction of the first fin portion 26 and the second fin portion 27 of the crown block 11. Accordingly, the change in traction during straight running and during cornering becomes linear.

The length L10 in the tire circumferential direction of each fin portion 17 of the middle block 12 is, for example, preferably not less than 60% and further preferably not less than 80%, and is preferably not greater than 130% and further preferably not greater than 115%, of a length L9 in the tire circumferential direction of the middle block 12. In addition, a width W3 in the tire axial direction of each fin portion 17 of the middle block 12 is, for example, preferably not less than 5% and further preferably not less than 10%, and is preferably not greater than 20% and further preferably not greater than 15%, of the length L11 in the tire axial direction of the middle block 12.

A side surface 12e, facing the toe side in the rotation direction R, of the middle block 12 is, for example, inclined to the toe side from the tire equator C side toward the tread end Te side. An angle θ2 of the side surface 12e relative to the tire axial direction is, for example, 5 to 30°.

The length L11 in the tire axial direction of the middle block 12 is preferably smaller than the length La in the tire axial direction of the crown block 11. Specifically, the length L11 of the middle block 12 is 50 to 80% of the length La of the crown block 11.

As shown in FIG. 2, a centroid 12c of the tread surface of the middle block 12 is located on the toe side of a centroid 11c of the tread surface of the crown block 11. A distance L12 in the tire circumferential direction from the centroid 12c of the middle block 12 to the centroid 11c of the crown block 11 is, for example, 10% to 30% of one pitch length P1 of the blocks. Accordingly, the middle block 12 guides mud and dirt pushed away to the tire equator C side, to the crown block 11 side, and the mud and the dirt are further pushed away by the crown block 11. Therefore, traction performance is further improved.

Each shoulder block 13 of the present embodiment is formed, for example, as a finless block that does not include any fin portion 17 described above. The tread surface of the shoulder block 13 has, for example, a rectangular shape, and preferably a trapezoidal shape. The tread surface of each shoulder block 13 of the present embodiment includes two edges extending so as to be parallel to the tire circumferential direction. The length in the tire circumferential direction of the shoulder block 13 increases toward the tread end Te side. The stiffness of such a shoulder block 13 increases toward the tread end Te, and thus the response when increasing the camber angle of a vehicle body can be linear.

The tread portion 2 includes, for example, crown tie bars 31 and shoulder tie bars 32. Each crown tie bar 31 is raised from the base surface 8 and connects the crown block 11 and the middle block 12. Each shoulder tie bar 32 is raised from the base surface 8 and connects the shoulder block 13 and the middle block 12. In the present embodiment, the blocks connected by the respective tie bars are integrated to improve traction performance.

Hereinafter, other embodiments of the present invention will be described. In drawings showing the other embodiments, the elements already described are designated by the same reference characters as those described above, and the above-described configurations can be applied thereto.

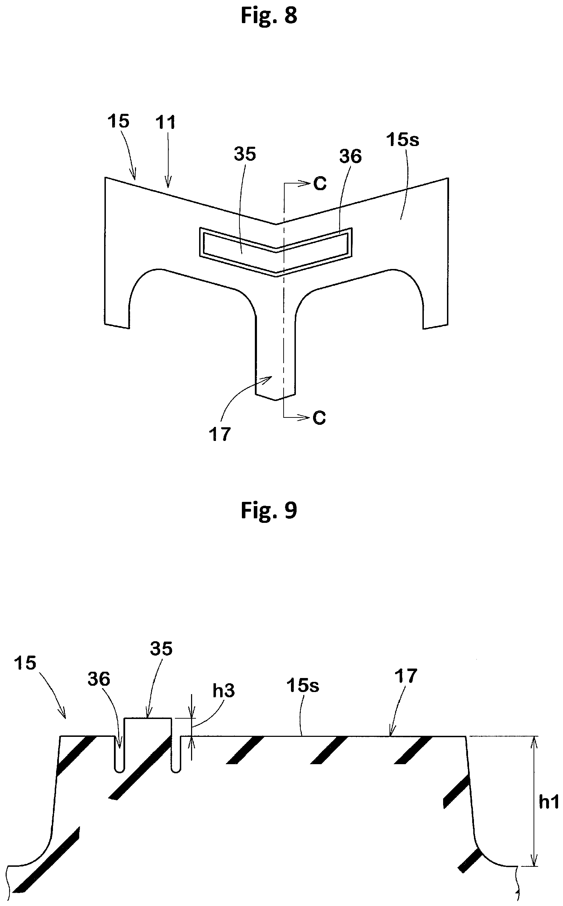

FIG. 8 is an enlarged plan view of a finned block 15 of another embodiment of the present invention. FIG. 9 is a cross-sectional view taken along a line C-C in FIG. 8. The finned block 15 shown in FIG. 8 and FIG. 9 is applied, for example, to each crown block 11 in the tread pattern shown in FIG. 2. In addition, the finned block 15 shown in FIG. 8 and FIG. 9 may be applied, for example, to each middle block 12 shown in FIG. 2.

As shown in FIG. 8 and FIG. 9, a protrusion 35 is provided on a tread surface 15s of the finned block 15 of this embodiment so as to protrude in the block height direction. A protrusion height h3 of the protrusion 35 from the tread surface 15s is 5% to 25% of the maximum height h1 of the finned block 15. In addition, the protrusion 35 is, for example, surrounded by a tread surface recess 36 that is recessed from the tread surface 15s. Such a protrusion 35 can provide great reaction force in the tire circumferential direction and the tire axial direction by sticking to a road surface, and can prevent mud and dirt from adhering and being held around the block.

The protrusion 35, in combination with the fin portions 17, the tread surface recess 36, and the recesses 18 described above, further enhances traction performance. In addition, by deformation of the protrusion 35, mud can be prevented from being held around the fin portions 17, the tread surface recess 36, and the recesses 18.

Moreover, when the protrusion 35 is provided to the finned block 15 which is long in the tire axial direction as in the present embodiment, a synergistic effect that steering stability during traction and during braking is improved can be expected.

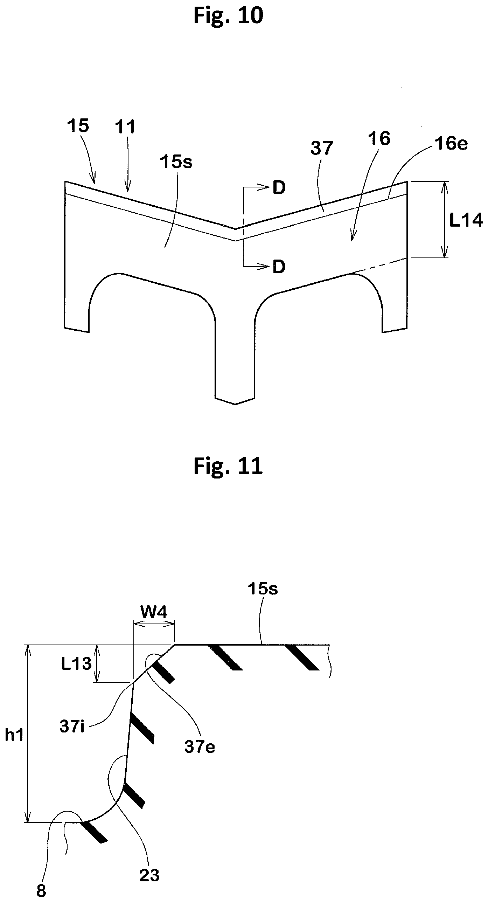

FIG. 10 is an enlarged plan view of a finned block 15 of still another embodiment of the present invention. FIG. 11 is a cross-sectional view taken along a line D-D in FIG. 10. The finned block 15 shown in FIG. 10 and FIG. 11 is applied, for example, to each crown block 11 in the tread pattern shown in FIG. 2. In addition, the finned block 15 shown in FIG. 10 and FIG. 11 may be applied, for example, to each middle block 12 shown in FIG. 2.

As shown in FIG. 10 and FIG. 11, a chamfered portion 37 is provided at the edge (first block edge 16e) of the tread surface 15s of the finned block 15. The chamfered portion 37 is formed as an inclined surface 37e that is inclined from the tread surface 15s toward the base surface 8. In a more preferable mode, the chamfered portion 37 is connected to the first side surface 23. Such a chamfered portion 37 can disperse the reaction force received by the block from a road surface, and further can prevent an excessive load from acting on the block.

An inner edge 37i on the base surface 8 side of the chamfered portion 37 is preferably located on the base surface 8 side of the tread surface of the block main body 16. A length L13 in the block height direction of the chamfered portion 37 is 5% to 50% of the maximum height h1 of the finned block 15. A width W4, in a direction along the block tread surface, of the chamfered portion 37 is 5% to 50% of a length L14 in the tire circumferential direction of the block main body 16. Such a chamfered portion 37 can enhance the durability of the block while maintaining traction performance.

The chamfered portion 37 can further improve the durability of the finned block 15 by being combined with the axially long finned block 15 and the circumferentially long recesses 18 described above. In addition, the durability of the finned block 15 and traction performance can be achieved at a higher level by combining the chamfered portion 37 with the protrusion 35.

Although the preferred embodiments of the tire for a motorcycle for running on rough terrain according to the present invention have been described in detail above, the present invention is not limited to the above specific embodiments, and various modifications can be made to implement the present invention within the scope of the appended claims.

### EXAMPLES

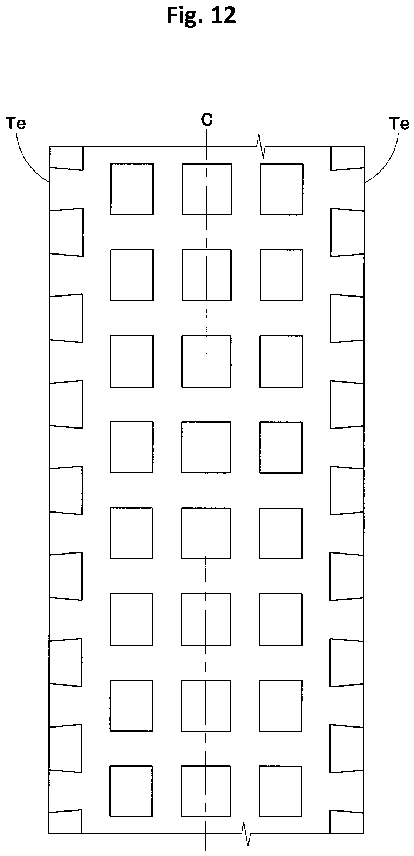

Rear wheel tires for a motorcycle for running on rough terrain having the basic structure in FIG. 2 were produced as test tires on the basis of specifications in Table 1. A tire having the tread portion shown in FIG. 12 was produced as a rear wheel tire for a motorcycle for running on rough terrain (reference tire), which serves as a reference for performance comparison. A plurality of blocks each having a rectangular tread surface are provided to the tread portion of the reference tire. A tire of a comparative example has substantially the same tread pattern as the tread pattern shown in FIG. 2, except that no recess is provided between fin portions. Each test tire was tested for traction performance. The common specifications and the test method for the respective test tires are as follows.
Vehicle used: a motocross racing vehicle having an engine displacement of 450 cc
Tire size: 120/80-19
Rim size: 2.15WM
Internal pressure: 80 kPa

The test method is as follows.

### <Traction Performance>

The time when the above test vehicle ran on a 100 m straight road of rough terrain with full throttle acceleration was measured a plurality of times, and the average time was calculated. As for the result, the shortened time from the average time of the reference tire is shown as an index with the shortened time of the comparative example being regarded as 100. A higher value indicates that the shortened time is larger and that the traction performance is better.

The results of the test are shown in Table 1 to Table 6. L5 is the same in all the comparative example and the Examples

**[Table 1]**

| | Comparative Example | Example 1 | Example 2 | Example 3 | Example 4 | Example 5 | Example 6 | Example 7 | Example 8 | Example 9 |
|---|---|---|---|---|---|---|---|---|---|---|
| L4/L5 (%) | 100 | 25 | 15 | 20 | 30 | 35 | 25 | 25 | 25 | 25 |
| L5/Ld (times) | 2.5 | 2.5 | 2.5 | 2.5 | 2.5 | 2.5 | 1.2 | 1.5 | 3.5 | 3.8 |
| Traction performance (index) | 100 | 120 | 110 | 115 | 115 | 110 | 112 | 116 | 117 | 113 |

**[Table 2]**

| | Comparative Example | Example 1 | Example 10 | Example 11 | Example 12 | Example 13 | Example 14 | Example 15 | Example 16 | Example 17 |
|---|---|---|---|---|---|---|---|---|---|---|
| L5/L4 (times) | 1.0 | 4.0 | 4.0 | 4.0 | 4.0 | 4.0 | 4.0 | 4.0 | 4.0 | 4.0 |
| L1/L6 (%) | 63 | 63 | 45 | 50 | 80 | 85 | 63 | 63 | 63 | 63 |
| θ1 and θ2 (°) | 15 | 15 | 15 | 15 | 15 | 15 | 0 | 5 | 30 | 35 |
| Traction performance (index) | 100 | 120 | 114 | 117 | 116 | 113 | 115 | 118 | 117 | 112 |

**[Table 3]**

| | Comparative Example | Example 1 | Example 18 | Example 19 | Example 20 | Example 21 |
|---|---|---|---|---|---|---|
| L5/L4 (times) | 1.0 | 4.0 | 4.0 | 4.0 | 4.0 | 4.0 |
| h2/h1 | 25 | 25 | 15 | 20 | 50 | 55 |
| Traction performance (index) | 100 | 120 | 112 | 117 | 116 | 113 |

**[Table 4]**

| | Comparative Example | Example 1 | Example 22 | Example 23 | Example 24 | Example 25 | Example 26 | Example 27 |
|---|---|---|---|---|---|---|---|---|
| L5/L4 (times) | 1.0 | 4.0 | 4.0 | 4.0 | 4.0 | 4.0 | 4.0 | 4.0 |
| Presence/absence of protrusion | Absence | Absence | Presence | Presence | Presence | Presence | Presence | Presence |
| Presence/absence of tread surface recess | Absence | Absence | Presence | Presence | Presence | Presence | Presence | Absence |
| h3/h1 (%) | - | - | 20 | 3 | 5 | 25 | 28 | 20 |
| Traction performance (index) | 100 | 120 | 123 | 117 | 122 | 123 | 118 | 116 |

**[Table 5]**

| | Comparative Example | Example 1 | Example 28 | Example 29 | Example 30 | Example 31 | Example 32 | Example 33 | Example 34 | Example 35 | Example 36 |
|---|---|---|---|---|---|---|---|---|---|---|---|
| L5/L4 (times) | 1.0 | 4.0 | 4.0 | 4.0 | 4.0 | 4.0 | 4.0 | 4.0 | 4.0 | 4.0 | 4.0 |
| Presence/absence of chamfered portion | Absence | Absence | Presence | Presence | Presence | Presence | Presence | Presence | Presence | Presence | Presence |
| L13/hl (%) | - | - | 20 | 3 | 5 | 50 | 55 | 20 | 20 | 20 | 20 |
| W4/L14 (%) | - | - | 20 | 20 | 20 | 20 | 20 | 5 | 10 | 50 | 55 |
| Traction performance (index) | 100 | 120 | 123 | 117 | 122 | 123 | 118 | 118 | 122 | 123 | 117 |

**[Table 6]**

| | Comparative Example | Example 1 | Example 37 | Example 38 | Example 39 | Example 40 |
|---|---|---|---|---|---|---|
| L5/L4 (times) | 1.0 | 4.0 | 4.0 | 4.0 | 4.0 | 4.0 |
| L12/P1 (%) | 20 | 20 | 5 | 10 | 30 | 35 |
| Traction performance (index) | 100 | 120 | 113 | 117 | 118 | 112 |

As shown in Table 1 to Table6, it is confirmed that the tire of each Example has improved traction performance. As shown in Table 2, it is confirmed that various dimensions of the finned block affect traction performance. In addition, as shown in Table 3, it is confirmed that various dimensions of the curved surface affect traction performance. Furthermore, as shown in Table 4, it is confirmed that the protusion serves to improve traction performance. Moreover, as shown in Table 5, it is confirmed that the chamfred portion affects traction performance. Moreover, as shown in Table 6, it is confirmed that the distance between the centroid of the middle block and the centroid of the crown block affects traction performance.

## Claims

1. A tire (1) for a motorcycle for running on rough terrain, comprising a tread portion (2), wherein
the tread portion (2) includes a base surface (8) and a plurality of blocks (10) raised outward in a tire radial direction from the base surface (8),
at least one of the plurality of blocks (10) includes a finned block (15),
the finned block (15) includes a block main body (16) and at least two fin portions (17) having a smaller width in a tire axial direction than the block main body (16) and extending to one side in a tire circumferential direction, and
a recess (18) is provided between the two fin portions (17) so as to be recessed from the base surface (8),
**characterized in that**
a length (L5) in the tire circumferential direction of the recess (18) is larger than a length (L4) in the tire axial direction of the recess (18).

2. The tire (1) for a motorcycle for running on rough terrain according to claim 1, wherein the recess (18) is provided between regions (25) obtained by respectively extending the two fin portions (17) so as to be parallel to the tire circumferential direction.

3. The tire (1) for a motorcycle for running on rough terrain according to claim 1 or 2, wherein a distance (L2) in the tire circumferential direction from the block main body (16) to the recess (18) is smaller than a length (Ld) in the tire circumferential direction of each of the two fin portions (17).

4. The tire (1) for a motorcycle for running on rough terrain according to claim 3, wherein, in a tread development, the recess (18) is provided on the block main body (16) side of a straight line (19) connecting tips (17t) of the two fin portions (17).

5. The tire (1) for a motorcycle for running on rough terrain according to any one of claims 1 to 4, wherein the length (L5) in the tire circumferential direction of the recess (18) is larger than the length (Ld) in the tire circumferential direction of each of the two fin portions (17).

6. The tire (1) for a motorcycle for running on rough terrain according to any one of claims 1 to 5, wherein the recess (18) is provided at a middle position in the tire axial direction between the two fin portions (17).

7. The tire (1) for a motorcycle for running on rough terrain according to any one of claims 1 to 6, wherein the one recess (18) is provided between the two fin portions (17).

8. The tire (1) for a motorcycle for running on rough terrain according to any one of claims 1 to 7, wherein a length (L6) in the tire axial direction of the finned block (15) is larger than a length (L1) in the tire circumferential direction of the finned block (15).

9. The tire (1) for a motorcycle for running on rough terrain according to any one of claims 1 to 8, wherein
the tread portion (2) has a designated rotation direction (R) of the tire (1), and
the fin portions (17) are provided on a heel side in the rotation direction (R) of the block main body (16).

10. The tire (1) for a motorcycle for running on rough terrain according to any one of claims 1 to 9, wherein
the finned block (15) includes a first side surface (23) facing another side in the tire circumferential direction, and
the first side surface (23) is connected to the base surface (8) via a curved surface (30).

11. The tire (1) for a motorcycle for running on rough terrain according to claim 10, wherein a maximum height (h2) of the curved surface (30) from the base surface (8) is smaller than a maximum height (h1) of the finned block (15) from the base surface (8).

12. The tire (1) for a motorcycle for running on rough terrain according to any one of claims 1 to 11, wherein the finned block (15) includes a protrusion (35) protruding from a tread surface (15s) thereof in a block height direction, and a tread surface recess (36) recessed from the tread surface (15s).

13. The tire (1) for a motorcycle for running on rough terrain according to any one of claims 1 to 12, wherein
the tread portion (2) has a designated rotation direction (R) of the tire (1),
the tread surface (15s) of the finned block (15) has an edge (16e) on a toe side of the rotation direction (R), and
a chamfered portion (37) is provided at the edge (16e) on the toe side.

14. The tire (1) for a motorcycle for running on rough terrain according to any one of claims 1 to 13, wherein the finned block (15) includes a crown block (11) on a tire equator (C) side and a middle block (12) adjacent to the crown block (11).

15. The tire (1) for a motorcycle for running on rough terrain according to claim 14, wherein
the tread portion (2) has a designated rotation direction (R) of the tire (1), and
a centroid (12c) of a tread surface of the middle block (12) is located on the toe side in the rotation direction (R) of a centroid (11c) of a tread surface of the crown block (11).

## Patentansprüche

1. Reifen (1) für ein Motorrad zur Fahrt auf unwegsamem Gelände, der einen Laufflächenabschnitt (2) umfasst, wobei
der Laufflächenabschnitt (2) eine Basisfläche (8) und eine Vielzahl von Blöcken (10) aufweist, die sich in einer radialen Richtung des Reifens von der Basisfläche (8) nach außen erheben,
wobei mindestens einer der Vielzahl von Blöcken (10) einen gerippten Block (15) enthält,
der gerippte Block (15) einen Blockhauptkörper (16) und mindestens zwei Rippenabschnitte (17) umfasst, die in einer axialen Richtung des Reifens eine geringere Breite als der Blockhauptkörper (16) aufweisen und sich in einer Umfangsrichtung des Reifens zu einer Seite hin erstrecken, und
eine Aussparung (18) zwischen den beiden Rippenabschnitten (17) vorgesehen ist, so dass sie von der Basisfläche (8) ausgespart ist,
**dadurch gekennzeichnet, dass**
eine Länge (L5) der Aussparung (18) in der Umfangsrichtung des Reifens größer ist als eine Länge (L4) der Aussparung (18) in der axialen Richtung des Reifens.

2. Reifen (1) für ein Motorrad zur Fahrt auf unwegsamem Gelände nach Anspruch 1, wobei die Aussparung (18) zwischen Bereichen (25) vorgesehen ist, die durch jeweiliges Erweitern der beiden Rippenabschnitte (17) erhalten sind, so dass sie parallel zur Umfangsrichtung des Reifes verlaufen.

3. Reifen (1) für ein Motorrad zur Fahrt auf unwegsamem Gelände nach Anspruch 1 oder 2, wobei ein Abstand (L2) in der Umfangsrichtung des Reifes von dem Blockhauptkörper (16) zu der Aussparung (18) kleiner ist als eine Länge (Ld) in der Umfangsrichtung des Reifes von jedem der beiden Rippenabschnitte (17).

4. Reifen (1) für ein Motorrad zur Fahrt auf unwegsamem Gelände nach Anspruch 3, wobei die Aussparung (18) bei einer Laufflächenabwicklung auf der Seite des Blockhauptkörpers (16) einer geraden Linie (19), die die Spitzen (17t) der beiden Rippenabschnitte (17) verbindet, vorgesehen ist.

5. Reifen (1) für ein Motorrad zur Fahrt auf unwegsamem Gelände nach einem der Ansprüche 1 bis 4, wobei die Länge (L5) der Aussparung (18) in der Umfangsrichtung des Reifes größer ist als die Länge (Ld) jedes der beiden Rippenabschnitte (17) in der Reifenumfangsrichtung.

6. Reifen (1) für ein Motorrad zur Fahrt auf unwegsamem Gelände nach einem der Ansprüche 1 bis 5, wobei die Aussparung (18) an einer mittleren Position in der axialen Richtung des Reifens zwischen den beiden Rippenabschnitten (17) vorgesehen ist.

7. Reifen (1) für ein Motorrad zur Fahrt auf unwegsamem Gelände nach einem der Ansprüche 1 bis 6, wobei die eine Aussparung (18) zwischen den beiden Rippenabschnitten (17) vorgesehen ist.

8. Reifen (1) für ein Motorrad zur Fahrt auf unwegsamem Gelände nach einem der Ansprüche 1 bis 7, wobei eine Länge (L6) in der axialen Richtung des Reifens des gerippten Blocks (15) größer ist als eine Länge (L1) in der Umfangsrichtung des Reifens des gerippten Blocks (15).

9. Reifen (1) für ein Motorrad zur Fahrt auf unwegsamem Gelände nach einem der Ansprüche 1 bis 8, wobei
der Laufflächenabschnitt (2) eine bestimmte Drehrichtung (R) des Reifens (1) aufweist, und
die Rippenabschnitte (17) auf einer Fersenseite in Drehrichtung (R) des Blockhauptkörpers (16) vorgesehen sind.

10. Reifen (1) für ein Motorrad zur Fahrt auf unwegsamem Gelände nach einem der Ansprüche 1 bis 9, wobei
der gerippte Block (15) eine erste Seitenfläche (23) aufweist, die einer anderen Seite in der Umfangsrichtung des Reifes zugewandt ist, und
die erste Seitenfläche (23) über eine gekrümmte Fläche (30) mit der Basisfläche (8) verbunden ist.

11. Reifen (1) für ein Motorrad zur Fahrt auf unwegsamem Gelände nach Anspruch 10, wobei eine maximale Höhe (h2) der gekrümmten Fläche (30) von der Basisfläche (8) kleiner ist als eine maximale Höhe (h1) des gerippten Blocks (15) von der Basisfläche (8).

12. Reifen (1) für ein Motorrad zur Fahrt auf unwegsamem Gelände nach einem der Ansprüche 1 bis 11, wobei der gerippte Block (15) einen Vorsprung (35) aufweist, der von seiner Laufflächenoberfläche (15s) in einer Blockhöhenrichtung vorsteht, und eine Laufflächenoberflächenaussparung (36), die von der Laufflächenoberfläche (15s) ausgespart ist.

13. Reifen (1) für ein Motorrad zur Fahrt auf unwegsamem Gelände nach einem der Ansprüche 1 bis 12, wobei
der Laufflächenabschnitt (2) eine bestimmte Drehrichtung (R) des Reifens (1) aufweist,
die Lauffläche (15s) des gerippten Blocks (15) eine Kante (16e) auf einer Zehenseite der Drehrichtung (R) aufweist, und
ein abgeschrägter Abschnitt (37) an der Kante (16e) auf der Zehenseite vorgesehen ist.

14. Reifen (1) für ein Motorrad zur Fahrt auf unwegsamem Gelände nach einem der Ansprüche 1 bis 13, wobei der gerippte Block (15) einen Kronenblock (11) auf einer Seite des Reifenäquators (C) und einen mittleren Block (12) benachbart zu dem Kronenblock (11) aufweist.

15. Reifen (1) für ein Motorrad zur Fahrt auf unwegsamem Gelände nach Anspruch 14, wobei
der Laufflächenabschnitt (2) eine bestimmte Drehrichtung (R) des Reifens (1) aufweist, und
ein Schwerpunkt (12c) einer Laufflächenoberfläche des mittleren Blocks (12) sich auf der Zehenseite in der Drehrichtung (R) eines Schwerpunkts (11c) einer Laufflächenoberfläche des Kronenblocks (11) befindet.

## Revendications

1. Pneumatique (1) pour une motocyclette destinée à circuler sur un terrain accidenté, comprenant une portion formant bande de roulement (2), dans lequel
la portion formant bande de roulement (2) inclut une surface de base (8) et une pluralité de blocs (10) élevés vers l'extérieur dans une direction radiale du pneumatique depuis la surface de base (8),
au moins un bloc parmi la pluralité de blocs (10) inclut un bloc à ailettes (15), le bloc à ailettes (15) inclut un corps principal formant bloc (16) et au moins deux portions formant ailettes (17) ayant une plus petite largeur dans une direction axiale du pneumatique que le corps principal formant bloc (16) et s'étendant jusqu'à un côté dans une direction circonférentielle du pneumatique, et
un évidement (18) est prévu entre les deux portions formant ailettes (17) de manière à être évidé par rapport à la surface de base (8),
**caractérisé en ce que**
une longueur (L5) dans la direction circonférentielle du pneumatique de l'évidement (18) est plus grande qu'une longueur (L4) dans la direction axiale du pneumatique de l'évidement (18).

2. Pneumatique (1) pour une motocyclette destinée à circuler sur un terrain accidenté selon la revendication 1, dans lequel l'évidement (18) est prévu entre des régions (25) obtenues en étendant respectivement les deux portions formant ailettes (17) de manière à être parallèles à la direction circonférentielle du pneumatique.

3. Pneumatique (1) pour une motocyclette destinée à circuler sur un terrain accidenté selon la revendication 1 ou 2, dans lequel une distance (L2) dans la direction circonférentielle du pneumatique depuis le corps principal formant bloc (16) jusqu'à l'évidement (18) est plus petite qu'une longueur (Ld) dans la direction circonférentielle du pneumatique de chacune des deux portions formant ailettes (17).

4. Pneumatique (1) pour une motocyclette destinée à circuler sur un terrain accidenté selon la revendication 3, dans lequel, dans un développement de bande de roulement, l'évidement (18) est prévu sur le côté du corps principal formant bloc (16) d'une ligne droite (19) connectant des pointes (17t) des deux portions formant ailettes (17).

5. Pneumatique (1) pour une motocyclette destinée à circuler sur un terrain accidenté selon l'une quelconque des revendications 1 à 4, dans lequel la longueur (L5) dans la direction circonférentielle du pneumatique de l'évidement (18) est plus grande que la longueur (Ld) dans la direction circonférentielle du pneumatique de chacune des deux portions formant ailettes (17).

6. Pneumatique (1) pour une motocyclette destinée à circuler sur un terrain accidenté selon l'une quelconque des revendications 1 à 5, dans lequel l'évidement (18) est prévu à une position médiane dans la direction axiale du pneumatique entre les deux portions formant ailettes (17).

7. Pneumatique (1) pour une motocyclette destinée à circuler sur un terrain accidenté selon l'une quelconque des revendications 1 à 6, dans lequel ledit un évidement (18) est prévu entre les deux portions formant ailettes (17).

8. Pneumatique (1) pour une motocyclette destinée à circuler sur un terrain accidenté selon l'une quelconque des revendications 1 à 7, dans lequel une longueur (L6) dans la direction axiale du pneumatique du bloc à ailettes (15) est plus grande qu'une longueur (L1) dans la direction circonférentielle du pneumatique du bloc à ailettes (15).

9. Pneumatique (1) pour une motocyclette destinée à circuler sur un terrain accidenté selon l'une quelconque des revendications 1 à 8, dans lequel
la portion formant bande de roulement (2) a une direction de rotation par conception (R) du pneumatique (1), et
les portions formant ailettes (17) sont prévues sur un côté arrière dans la direction de rotation (R) du corps principal formant bloc (16).

10. Pneumatique (1) pour une motocyclette destinée à circuler sur un terrain accidenté selon l'une quelconque des revendications 1 à 9, dans lequel
le bloc à ailettes (15) inclut une première surface latérale (23) faisant face à un autre côté dans la direction circonférentielle du pneumatique, et
la première surface latérale (23) est connectée à la surface de base (8) via une surface incurvée (30).

11. Pneumatique (1) pour une motocyclette destinée à circuler sur un terrain accidenté selon la revendication 10, dans lequel une hauteur maximum (h2) de la surface incurvée (30) par rapport à la surface de base (8) est plus petite qu'une hauteur maximum (h1) du bloc à ailettes (15) par rapport à la surface de base (8).

12. Pneumatique (1) pour une motocyclette destinée à circuler sur un terrain accidenté selon l'une quelconque des revendications 1 à 11, dans lequel le bloc à ailettes (15) inclut une projection (35) se projetant depuis une surface de bande de roulement (15s) de celle-ci dans une direction de la hauteur du bloc, et un évidement de surface de bande de roulement (36) est évidé par rapport à la surface de bande de roulement (15s).

13. Pneumatique (1) pour une motocyclette destinée à circuler sur un terrain accidenté selon l'une quelconque des revendications 1 à 12, dans lequel
la portion formant bande de roulement (2) a une direction de rotation par conception (R) du pneumatique (1),
la surface de bande de roulement (15s) du bloc à ailettes (15) a un bord (16e) sur un côté avant de la direction de rotation (R), et
une portion chanfreinée (37) est prévue au niveau du bord (16e) sur le côté avant.

14. Pneumatique (1) pour une motocyclette destinée à circuler sur un terrain accidenté selon l'une quelconque des revendications 1 à 13, dans lequel le bloc à ailettes (15) inclut un bloc de couronne (11) sur un côté de l'équateur de pneumatique (C) et un bloc médian (12) adjacent au bloc de couronne (11).

15. Pneumatique (1) pour une motocyclette destinée à circuler sur un terrain accidenté selon la revendication 14, dans lequel
la portion formant bande de roulement (2) a une direction de rotation par conception (R) du pneumatique (1), et
un barycentre (12c) d'une surface de bande de roulement du bloc médian (12) est situé sur le côté avant dans la direction de rotation (R) d'un barycentre (11c) d'une surface de bande de roulement du bloc de couronne (11).
